# EUROPÄISCHE PATENTANMELDUNG

(11) **EP 4 033 468 A1**
(43) Veröffentlichungstag der Anmeldung: **27.07.2022**
(21) Anmeldenummer: 21215897.6
(22) Anmeldetag: 20.12.2021
(51) Int. Cl.: G08C 17/02

(54) **VORRICHTUNG UND VERFAHREN ZUR FERN-STEUERUNG EINES HAUSGERÄTS**

(30) Priorität: 21.01.2021 DE 102021200513
(71) Anmelder: BSH Hausgeräte GmbH, 81739 München (DE)
(72) Erfinder: Dall Acqua, Daniele, 81929 München (DE); Goldschalt, Tobias, 83329 Waging am See (DE); Wypior, Adam, 93133 Burglengenfeld (DE)

(57) **Zusammenfassung**

Es wird eine Vorrichtung (104) zur Fern-Steuerung eines Hausgeräts (110) beschrieben. Die Vorrichtung (104) ist eingerichtet, eine Fern-Steueranweisung (131) zur Fern-Steuerung eines Hausgeräts (110) von einem mobilen Steuergerät (120) zu empfangen. Des Weiteren ist die Vorrichtung (104) eingerichtet, anhand eines Innenraum-Positionierungssystems eine Position des Steuergeräts (120) relativ zu dem Hausgerät (110) zu ermitteln. Die Vorrichtung (104) ist ferner eingerichtet, die Fern-Steueranweisung (131) in Abhängigkeit von der ermittelten Position des Steuergeräts (120) umzusetzen oder nicht umzusetzen.

## Beschreibung

Die Erfindung betrifft eine Vorrichtung und ein entsprechendes Verfahren zur sicheren Fern-Steuerung eines Hausgeräts.

Ein Hausgerät, etwa eine Spülmaschine, eine Waschmaschine, ein Herd, eine Kaffeemaschine, ein Ofen, ein Trockner, etc., kann ausgebildet sein, mittels eines Fern-Steuergeräts, z.B. mittels eines Smartphones, ferngesteuert zu werden. Das vorliegende Dokument befasst sich mit der technischen Aufgabe, in effizienter Weise eine besonders sichere und komfortable Fern-Steuerung eines Hausgeräts zu ermöglichen.

Die Aufgabe wird jeweils durch den Gegenstand der unabhängigen Patentansprüche gelöst. Vorteilhafte Ausführungsformen sind insbesondere in den abhängigen Patentansprüchen definiert, in nachfolgender Beschreibung beschrieben oder in der beigefügten Zeichnung dargestellt.

Gemäß einem Aspekt der Erfindung wird eine Vorrichtung zur Fern-Steuerung eines Hausgeräts, z.B. einer Spülmaschine, einer Waschmaschine, eines Trockners, eines Ofens, eines Herds, etc., beschrieben. Das Hausgerät kann in einem Haushalt mit ein oder mehreren unterschiedlichen Räumen angeordnet sein. In dem Haushalt kann ein Innenraum-Positionierungssystem angeordnet sein, das die Lokalisierung eines Steuergeräts (z.B. eines Smartphones) innerhalb des Haushalts ermöglicht. Das Innenraum-Positionierungssystems kann dabei eine Lokalisierung auf Basis ein oder mehrerer Funktechnologien, wie z.B. Bluetooth Low Energy (BTLE), Ultra-Wideband (UWB) und/oder RFID (Radio Frequency ID), ermöglichen. Die Vorrichtung kann außerhalb des Hausgeräts angeordnet sein. In einem alternativen Beispiel ist die Vorrichtung Teil des Hausgeräts.

Die Vorrichtung ist eingerichtet, eine Fern-Steueranweisung zur Fern-Steuerung eines Hausgeräts von einem mobilen Steuergerät (z.B. von einem Smartphone mit einer App zur Steuerung des Hausgeräts) zu empfangen. Die Fern-Steueranweisung kann darauf gerichtet sein, das Hausgerät oder ein Betriebsprogramm des Hausgeräts zu starten. Die Fern-Steueranweisung kann über ein Funknetz (z.B. über WLAN) von dem Steuergerät an die Vorrichtung übertragen werden (ggf. über ein oder mehrere Netzwerk-Knotenpunkte, wie z.B. Router).

Die Vorrichtung kann ferner eingerichtet sein, anhand des Innenraum-Positionierungssystems (des Haushalts, in dem sich das Hausgerät befindet) die Position des Steuergeräts relativ zu dem Hausgerät zu ermitteln. Insbesondere kann ermittelt werden, wie das Steuergerät relativ zu dem Hausgerät angeordnet ist (z.B. in welcher Entfernung und/oder in welcher Richtung das Steuergerät ausgehend von der Position des Hausgeräts angeordnet ist).

Des Weiteren ist die Vorrichtung eingerichtet, die Fern-Steueranweisung in Abhängigkeit von der ermittelten Position des Steuergeräts umzusetzen oder nicht umzusetzen. Die Vorrichtung kann insbesondere eingerichtet sein, in Abhängigkeit von der ermittelten Position des Steuergeräts, die Fern-Steueranweisung an das Hausgerät weiterzuleiten (um eine Umsetzung der Fern-Steueranweisung zu bewirken) oder eine Weiterleitung der Fern-Steueranweisung an das Hausgerät zu unterbinden (um zu bewirken, dass die Fern-Steueranweisung nicht umgesetzt wird).

Durch die Lokalisierung eines mobilen Steuergeräts mittels eines Innenraum-Positionierungssystems kann eine besonders effiziente, sichere und komfortable Fern-Steuerung eines Hausgeräts ermöglicht werden.

Die Vorrichtung kann eingerichtet sein, insbesondere in Reaktion auf den Empfang der Fern-Steueranweisung und/oder unabhängig von dem Empfang einer Fern-Steueranweisung, eine Anfrage in Bezug auf die Position des Steuergeräts an eine Positionierungseinheit des Innenraum-Positionierungssystems zu senden. Es kann dann eine Rückmeldung in Bezug auf die Position des Steuergeräts von der Positionierungseinheit des Innenraum-Positionierungssystems empfangen werden. Durch die Verwendung einer (separaten) Positionierungseinheit kann die Position des mobilen Steuergeräts in besonders effizienter und zuverlässiger Weise ermittelt werden.

Die Vorrichtung kann eingerichtet sein, auf Basis der ermittelten Position des Steuergeräts zu bestimmen, ob ausgehend von der Position des Steuergeräts (für einen Nutzer des Steuergeräts) eine Sichtverbindung zu dem Hausgerät zur Überwachung des Hausgeräts möglich ist oder nicht. Wie bereits oben dargelegt, kann das ferngesteuerte Hausgerät in einem Haushalt mit einem oder mehreren Räumen angeordnet sein. Das Innenraum-Positionierungssystem kann ausgebildet sein, die Position des Steuergeräts innerhalb des Haushalts zu ermitteln. Insbesondere kann das Innenraum-Positionierungssystem eingerichtet sein, zu ermitteln, in welchem Raum und/oder an welcher Stelle in einem Raum sich das mobile Steuergerät befindet.

Die Vorrichtung kann eingerichtet sein, auf Basis von digitalen Kartendaten in Bezug auf die räumliche Anordnung der ein oder mehreren Räume des Haushalts zu bestimmen, ob ausgehend von der Position des Steuergeräts (für einen Nutzer des Steuergeräts) eine Sichtverbindung zu dem Hausgerät zur Überwachung des Hausgeräts möglich ist oder nicht. Durch die Berücksichtigung von digitalen Kartendaten in Bezug auf die Geometrie des Haushalts, in dem sich das ferngesteuerte Hausgerät befindet, kann in besonders präziser Weise bestimmt werden, ob ausgehend von der Position des Steuergeräts (für einen Nutzer des Steuergeräts) eine Sichtverbindung zu dem Hausgerät zur Überwachung des Hausgeräts möglich ist oder nicht.

Die Vorrichtung kann ferner eingerichtet sein, zu bewirken, dass die Fern-Steueranweisung von dem Hausgerät umgesetzt wird, wenn bestimmt wird, dass ausgehend von der Position des Steuergeräts eine Sichtverbindung zu dem Hausgerät möglich ist. Dabei kann die Vorrichtung eingerichtet sein, zu bewirken, dass die Fern-Steueranweisung von dem Hausgerät umgesetzt wird, ohne dass dafür eine Bestätigung der Fern-Steueranweisung durch den Nutzer an einem (lokalen) Bedienelement des Hausgeräts (z.B. an einer Taste des Hausgeräts) erforderlich ist. So kann ein besonders sicherer und komfortabler ferngesteuerter Betrieb des Hausgeräts ermöglicht werden.

Andererseits kann die Vorrichtung eingerichtet sein, die Umsetzung der Fern-Steueranweisung durch das Hausgerät zu unterbinden, wenn bestimmt wird, dass ausgehend von der Position des Steuergeräts keine Sichtverbindung zu dem Hausgerät möglich ist. Die Vorrichtung kann ferner eingerichtet sein, eine Rückmeldung dahingehend an das Steuergerät zu senden, dass die Fern-Steueranweisung nicht durch das Hausgerät umgesetzt wird, wenn durch die Vorrichtung die Umsetzung der Fern-Steueranweisung unterbunden wird. So kann in komfortabler Weise eine unzulässige Fern-Steuerung des Hausgeräts unterbunden werden.

Gemäß einem weiteren Aspekt wird ein System zur Fern-Steuerung eines Hausgeräts beschrieben. Das System umfasst ein Innenraum-Positionierungssystem, das eingerichtet ist, die Position eines mobilen Steuergeräts zur Fern-Steuerung eines ersten Hausgeräts relativ zu dem ersten Hausgerät zu ermitteln. Des Weiteren umfasst das System eine in diesem Dokument beschriebene Vorrichtung zur Fern-Steuerung des ersten Hausgeräts in Abhängigkeit von der von dem Innenraum-Positionierungssystem ermittelten Position des Steuergeräts.

Das Innenraum-Positionierungssystem kann ein oder mehrere Hausgeräte (z.B. ein oder mehrere Geräte in einem Haushalt und/oder ein oder mehrere Geräte außerhalb eines Haushalts, etwa in einem Gebäude oder in einer Halle) umfassen, die als feststehende Anker-Knoten des Innenraum-Positionierungssystems jeweils eingerichtet sind, Positionsdaten in Bezug auf die Position des Steuergeräts relativ zu dem jeweiligen Hausgerät zu ermitteln. Die Positionsdaten eines Hausgeräts können dabei Information in Bezug auf eine Funkverbindung, insbesondere in Bezug auf die Signalstärke und/oder in Bezug auf die Distanz einer Funkverbindung (etwa eines BTLE oder eine UWB Funkverbindung), zwischen dem Steuergerät und dem Hausgerät umfassen.

Des Weiteren kann das Innenraum-Positionierungssystem eine Positionierungseinheit umfassen, die eingerichtet ist, die Position des Steuergeräts relativ zu dem ersten Hausgerät auf Basis der Positionsdaten der ein oder mehrere Hausgeräte zu ermitteln (z.B. anhand eines Triangulationsverfahrens). Die ein oder mehreren (ferngesteuerten) Hausgeräte eines Haushalts können somit in besonders effizienter Weise zur Ermittlung der Position des mobilen Steuergeräts verwendet werden.

In einem Beispiel umfasst das System das erste Hausgerät. Die in diesem Dokument beschriebene Vorrichtung kann in besonders effizienter Weise als Teil des ersten Hausgeräts, z.B. als Teil einer Steuereinheit des ersten Hausgeräts, bereitgestellt werden. Alternativ kann die Vorrichtung in flexibler Weise außerhalb des ersten Hausgeräts angeordnet sein.

Gemäß einem weiteren Aspekt wird ein Verfahren zur Fern-Steuerung eines Hausgeräts beschrieben. Das Verfahren umfasst das Empfangen einer Fern-Steueranweisung zur Fern-Steuerung eines Hausgeräts von einem mobilen Steuergerät. Des Weiteren umfasst das Verfahren das Ermitteln, anhand eines Innenraum-Positionierungssystems, einer Position des Steuergeräts relativ zu dem Hausgerät. Das Verfahren umfasst ferner, in Abhängigkeit von der ermittelten Position des Steuergeräts, das Umsetzen oder das Unterbinden der Fern-Steueranweisung.

Es ist zu beachten, dass jegliche Aspekte des in diesem Dokument beschriebenen Verfahrens und der in diesem Dokument beschriebenen Vorrichtung in vielfältiger Weise miteinander kombiniert werden können. Insbesondere können die Merkmale der Patentansprüche in vielfältiger Weise miteinander kombiniert werden.

Im Weiteren wird die Erfindung anhand von in der beigefügten Zeichnung dargestellten Ausführungsbeispielen näher beschrieben. Dabei zeigen
Figur 1 ein Blockdiagramm eines Systems zur Fern-Steuerung eines Hausgeräts; und
Figur 2 ein Ablaufdiagramm eines beispielhaften Verfahrens zur Fern-Steuerung eines Hausgeräts.

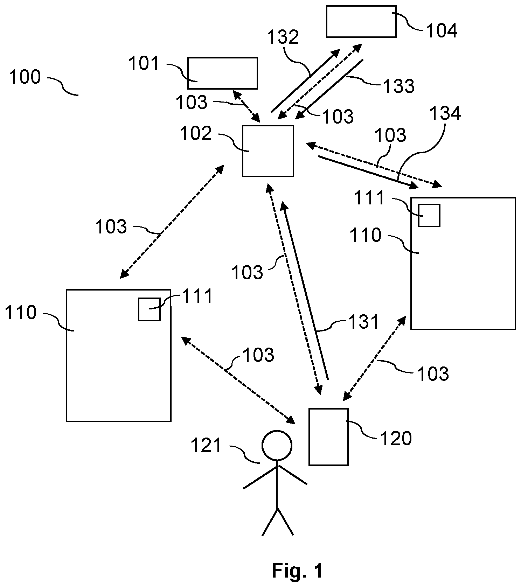

Wie eingangs dargelegt, befasst sich das vorliegende Dokument mit der effizienten, zuverlässigen, komfortablen und sicheren Fern-Steuerung eines Hausgeräts. In diesem Zusammenhang zeigt Fig. 1 ein beispielhaftes System 100 zur Fern-Steuerung eines Hausgeräts 110. Das System 100 kann mehrere unterschiedliche Hausgeräte 110 umfassen, die an unterschiedlichen Stellen eines Haushalts angeordnet sind, z.B. in der Küche, im Badezimmer, in einem Waschraum, etc. Ein Nutzer 121 der ein oder mehreren Hausgeräte 110 kann ein Fern-Steuergerät 120, z.B. ein Smartphone, mit sich führen, das es dem Nutzer 121 ermöglicht, die ein oder mehreren Hausgeräte 110 fernzusteuern. Zu diesem Zweck kann das Steuergerät 120 ausgebildet sein, eine Steueranweisung zur Steuerung eines bestimmten Hausgeräts 110 über eine (drahtlose) Kommunikationsverbindung 103 an das bestimmte Hausgerät 110 zu senden.

Für eine sichere Fern-Steuerung eines Hausgeräts 110, insbesondere für einen sicheren Betrieb, etwa für einen sicheren Start, eines Hausgeräts 110 mittels eines Fern-Steuergeräts 120, kann es erforderlich sein, dass sich der Nutzer 121 derart nah an dem ferngesteuerten Hausgerät 110 befindet, dass der Nutzer 121 den Betrieb des Hausgeräts 110 während der Fern-Steuerung überwachen kann. Das System 100 kann ausgebildet sein, die Position des Nutzers 121, insbesondere die Position des Steuergeräts 120, relativ zu dem ferngesteuerten Hausgerät 110 zu ermitteln. Die Position des Steuergeräts 120 kann dabei mittels eines Innenraum-Positionierungssystems (auf Englisch, Indoor Positioning System) des Haushalts ermittelt werden.

Die Hausgeräte 110 können teilweise oder alle ausgebildet sein, als fixe Ankerknoten in dem Innenraum-Positionierungssystem zu dienen. Insbesondere kann ein Hausgerät 110 eine Positionsdateneinheit 111 aufweisen, die ausgebildet ist, Positionsdaten in Bezug auf die Position des Steuergeräts 120 relativ zu dem jeweiligen Hausgerät 110 zu ermitteln. Die Positionsdaten können z.B. auf Basis einer (drahtlosen) Kommunikationsverbindung 103 zwischen dem Steuergerät 120 und dem jeweiligen Hausgerät 110 ermittelt werden, z.B. auf Basis einer Bluetooth Low Energy (BTLE), auf Basis einer Ultra-Wideband (UWB) und/oder auf Basis einer RFID (Radio Frequency ID) Verbindung) Die Positionsdaten können z.B. die Signalstärke und/oder die Distanz bzw. die Länge der Kommunikationsverbindung 103 zwischen dem Steuergerät 120 und dem jeweiligen Hausgerät 110 anzeigen.

Die Positionsdaten von unterschiedlichen Ankerknoten, insbesondere von unterschiedlichen Positionsdateneinheiten 111, können über einen Router 102 des Systems 100 an eine Positionierungseinheit 101 gesendet werden, die eingerichtet ist, auf Basis der Positionsdaten von mehreren Positionsdateneinheiten 111 die Position des Steuergeräts 120 relativ zu zumindest einem fernzusteuernden Hausgerät 110 zu ermitteln. Die ermittelte Position kann bei der Fern-Steuerung des Hausgeräts 110 berücksichtigt werden.

Das System 100 kann eine Steuer-Vorrichtung 104 umfassen, die eingerichtet ist, die Fern-Steuerung eines Hausgeräts 110 des Systems 100 zu überwachen. Eine von dem Steuergerät 120 des Nutzers 121 ausgesendete Steueranweisung 131 kann über den Router 102 an die Steuer-Vorrichtung 104 weitergeleitet werden (Nachricht 132). Die Steuer-Vorrichtung 104 kann daraufhin die von der Positionierungseinheit 101 des Systems 100 ermittelte Position des Steuergeräts 120 relativ zu dem fernzusteuernden Hausgerät 110 überprüfen.

Die Fern-Steuerung des Hausgeräts 110 kann in Abhängigkeit von der anhand des Innenraum-Positionierungssystems ermittelten Position des Steuergerät 120 ermöglicht oder unterbunden werden. Insbesondere kann die Steuer-Vorrichtung 104 ausgebildet sein, die Steueranweisung 131 an das Hausgerät 110 weiterzuleiten (Nachrichten 133, 134), wenn auf Basis der ermittelten Position des Steuergeräts 120 bestimmt wird, dass sich der Nutzer 121 in der unmittelbaren Umgebung des Hausgeräts 110 befindet (und somit die Fern-Steuerung des Hausgeräts 110 überwachen kann). Andererseits kann eine Weiterleitung der Steueranweisung 131 an das Hausgerät 110 unterbunden werden, wenn auf Basis der ermittelten Position des Steuergeräts 120 bestimmt wird, dass sich der Nutzer 121 nicht in der unmittelbaren Umgebung des Hausgeräts 110 befindet (und somit die Fern-Steuerung des Hausgeräts 110 nicht überwachen kann).

In dem Fall, dass die Steuer-Vorrichtung 104 Teil des Hausgeräts 110 ist, kann die Steuer-Vorrichtung 104 ausgebildet sein, die Ausführung der (an dem Hausgerät 110 empfangenen) Steueranweisung 131 in Abhängigkeit von der anhand des Innenraum-Positionierungssystems ermittelten Position des Steuergeräts 120 zu ermöglichen oder zu unterbunden.

So kann eine sichere und komfortable Fern-Steuerung eines Hausgeräts 110 ermöglicht werden, insbesondere ohne, dass der Nutzer 121 dafür eine manuelle Bestätigung der Fern-Steuerung direkt vor Ort an dem Hausgerät 110 durchführen muss.

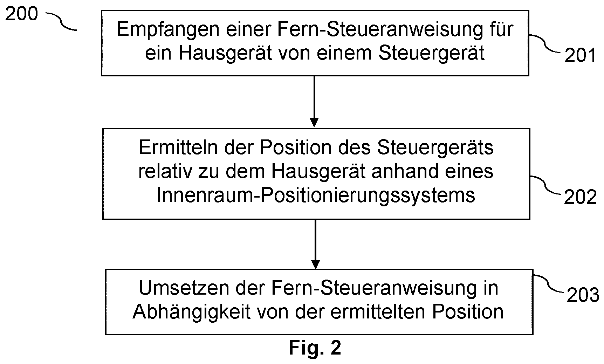

Fig. 2 zeigt ein Ablaufdiagramm eines beispielhaften (ggf. Computer-implementierten) Verfahrens 200 zur Fern-Steuerung eines Hausgeräts 110. Das Verfahren 200 kann durch eine Steuereinheit eines bzw. des Hausgeräts 110 und/oder durch eine Steuer-Vorrichtung 104 eines Haushalts (z.B. durch einen (Smart Home) Server) ausgeführt werden.

Das Verfahren 200 umfasst das Empfangen 201 einer Fern-Steueranweisung 131 zur Fern-Steuerung eines Hausgeräts 110 von einem mobilen Steuergerät 120 (z.B. von einem Smartphone). Die (von dem Steuergerät 120 gesendete) Fern-Steueranweisung 131 kann über ein drahtloses Kommunikationsnetz an der Steuer-Vorrichtung 104 und/oder an der Steuereinheit des Hausgeräts 110 empfangen werden.

Das Verfahren 200 umfasst ferner das Ermitteln 202, anhand eines Innenraum-Positionierungssystems, einer Position des Steuergeräts 120 relativ zu dem Hausgerät 110. Das Innenraum-Positionierungssystem kann ausgebildet sein, die Position des Steuergeräts 120 innerhalb des (gesamten) Haushalts zu ermitteln, in dem das fernzusteuernde Hausgerät 110 angeordnet ist. Dabei können ein oder mehrere Hausgeräte 110 (z.B. eine Waschmaschine, eine Spülmaschine, ein Ofen, ein Kühlschrank, ein Herd, eine Kaffeemaschine, eine Gefriertruhe, etc.) vorteilhafterweise als feststehende Ankerknoten des Innenraum-Positionierungssystems dienen.

Des Weiteren umfasst das Verfahren 200 das Umsetzen oder das Unterbinden 203 der Fern-Steueranweisung 131 in Abhängigkeit von der ermittelten Position des Steuergeräts 120. Die Umsetzung der Fern-Steueranweisung 131 kann z.B. erfolgen, wenn auf Basis der Position bestimmt wird, dass sich das Steuergerät 120 in unmittelbarer Nähe zu dem Hausgerät 110 befindet. Andererseits kann die Umsetzung der Fern-Steueranweisung 131 unterbunden werden. So kann in effizienter, komfortabler und zuverlässiger Weise eine sichere Fernsteuerung eines Hausgeräts 110 ermöglicht werden.

Die vorliegende Erfindung ist nicht auf die gezeigten Ausführungsbeispiele beschränkt. Insbesondere ist zu beachten, dass die Beschreibung und die Figuren nur das Prinzip des vorgeschlagenen Verfahrens und/oder der vorgeschlagenen Vorrichtung veranschaulichen sollen.

## Patentansprüche

1. Vorrichtung (104) zur Fern-Steuerung eines Hausgeräts (110); wobei die Vorrichtung (104) eingerichtet ist,
- eine Fern-Steueranweisung (131) zur Fern-Steuerung eines Hausgeräts (110) von einem mobilen Steuergerät (120) zu empfangen;
- anhand eines Innenraum-Positionierungssystems eine Position des Steuergeräts (120) relativ zu dem Hausgerät (110) zu ermitteln; und
- die Fern-Steueranweisung (131) in Abhängigkeit von der ermittelten Position des Steuergeräts (120) umzusetzen oder nicht umzusetzen.

2. Vorrichtung (104) gemäß Anspruch 1, wobei die Vorrichtung (104) eingerichtet ist,
- insbesondere in Reaktion auf den Empfang der Fern-Steueranweisung (131), eine Anfrage in Bezug auf die Position des Steuergeräts (120) an eine Positionierungseinheit (101) des Innenraum-Positionierungssystems zu senden; und
- eine Rückmeldung in Bezug auf die Position des Steuergeräts (120) von der Positionierungseinheit (101) des Innenraum-Positionierungssystems zu empfangen.

3. Vorrichtung (104) gemäß einem der vorhergehenden Ansprüche, wobei die Vorrichtung (104) eingerichtet ist,
- auf Basis der ermittelten Position des Steuergeräts (120) zu bestimmen, ob ausgehend von der Position des Steuergeräts (120) eine Sichtverbindung zu dem Hausgerät (110) zur Überwachung des Hausgeräts (110) möglich ist oder nicht; und
- zu bewirken, dass die Fern-Steueranweisung (131) von dem Hausgerät (110) umgesetzt wird, wenn bestimmt wird, dass ausgehend von der Position des Steuergeräts (120) eine Sichtverbindung zu dem Hausgerät (110) möglich ist; und/oder
- die Umsetzung der Fern-Steueranweisung (131) durch das Hausgerät (110) zu unterbinden, wenn bestimmt wird, dass ausgehend von der Position des Steuergeräts (120) keine Sichtverbindung zu dem Hausgerät (110) möglich ist.

4. Vorrichtung (104) gemäß Anspruch 3, wobei
- das Hausgerät (110) in einem Haushalt mit ein oder mehreren Räumen angeordnet ist;
- das Innenraum-Positionierungssystem ausgebildet ist, die Position des Steuergeräts (120) innerhalb des Haushalts zu ermitteln; und
- die Vorrichtung (104) eingerichtet ist, auf Basis von digitalen Kartendaten in Bezug auf eine räumliche Anordnung der ein oder mehreren Räume des Haushalts zu bestimmen, ob ausgehend von der Position des Steuergeräts (120) eine Sichtverbindung zu dem Hausgerät (110) zur Überwachung des Hausgeräts (110) möglich ist oder nicht.

5. Vorrichtung (104) gemäß einem der Ansprüche 3 bis 4, wobei die Vorrichtung (104) eingerichtet ist, eine Rückmeldung dahingehend an das Steuergerät (120) zu senden, dass die Fern-Steueranweisung (131) nicht durch das Hausgerät (110) umgesetzt wird, wenn durch die Vorrichtung (104) die Umsetzung der Fern-Steueranweisung (131) unterbunden wird.

6. Vorrichtung (104) gemäß einem der Ansprüche 3 bis 5, wobei die Vorrichtung (104) eingerichtet ist, zu bewirken, dass die Fern-Steueranweisung (131) von dem Hausgerät (110) umgesetzt wird, ohne dass dafür eine Bestätigung der Fern-Steueranweisung (131) durch einen Nutzer (121) an einem Bedienelement des Hausgeräts (110) erforderlich ist.

7. Vorrichtung (104) gemäß einem der vorhergehenden Ansprüche, wobei die Vorrichtung (104) eingerichtet ist, in Abhängigkeit von der ermittelten Position des Steuergeräts (120),
- die Fern-Steueranweisung (131) an das Hausgerät (110) weiterzuleiten; oder
- eine Weiterleitung der Fern-Steueranweisung (131) an das Hausgerät (110) zu unterbinden.

8. Vorrichtung (104) gemäß einem der vorhergehenden Ansprüche, wobei die Fern-Steueranweisung (131) darauf gerichtet ist, das Hausgerät (110) oder ein Betriebsprogramm des Hausgeräts (110) zu starten.

9. System (100) zur Fern-Steuerung eines Hausgeräts (110); wobei das System (100) umfasst,
- ein Innenraum-Positionierungssystem, das eingerichtet ist, eine Position eines mobilen Steuergeräts (120) zur Fern-Steuerung eines ersten Hausgeräts (110) relativ zu dem ersten Hausgerät (110) zu ermitteln; und
- eine Vorrichtung (104) gemäß einem der vorhergehenden Ansprüche, zur Fern-Steuerung des ersten Hausgeräts (110) in Abhängigkeit von der von dem Innenraum-Positionierungssystem ermittelten Position des Steuergeräts (120).

10. System (100) gemäß Anspruch 9, wobei das Innenraum-Positionierungssystem umfasst,
- ein oder mehrere Hausgeräte (110), die als feststehende Anker-Knoten des Innenraum-Positionierungssystems jeweils eingerichtet sind, Positionsdaten in Bezug auf eine Position des Steuergeräts (120) relativ zu dem jeweiligen Hausgerät (110) zu ermitteln; und
- eine Positionierungseinheit (101), die eingerichtet ist, die Position des Steuergeräts (120) relativ zu dem ersten Hausgerät (110) auf Basis der Positionsdaten der ein oder mehrere Hausgeräte (110) zu ermitteln.

11. System (100) gemäß Anspruch 10, wobei die Positionsdaten eines Hausgeräts (110) Information in Bezug auf eine Funkverbindung (103), insbesondere in Bezug auf eine Signalstärke und/oder in Bezug auf eine Distanz einer Funkverbindung (103), zwischen dem Steuergerät (120) und dem Hausgerät (110) umfassen.

12. System (100) gemäß einem der Ansprüche 9 bis 11, wobei
- das System (100) das erste Hausgerät (110) umfasst; und
- die Vorrichtung (104) Teil des ersten Hausgeräts (110) ist.

13. System (100) gemäß einem der Ansprüche 9 bis 11, wobei die Vorrichtung (104) außerhalb des ersten Hausgeräts (110) angeordnet ist.

14. Verfahren (200) zur Fern-Steuerung eines Hausgeräts (110); wobei das Verfahren (200) umfasst,
- Empfangen (201) einer Fern-Steueranweisung (131) zur Fern-Steuerung eines Hausgeräts (110) von einem mobilen Steuergerät (120);
- Ermitteln (202), anhand eines Innenraum-Positionierungssystems, einer Position des Steuergeräts (120) relativ zu dem Hausgerät (110); und
- Umsetzen oder Unterbinden (203) der Fern-Steueranweisung (131) in Abhängigkeit von der ermittelten Position des Steuergeräts (120).
